# EUROPEAN PATENT APPLICATION

(11) **EP 1 146 247 A2**
(43) Date of publication of application: **17.10.2001**
(21) Application number: 01108958.8
(22) Date of filing: 10.04.2001
(51) Int. Cl.: F16F 9/32

(54) **Hydraulic damper for a vehicle**

(30) Priority: 10.04.2000 JP 2000108326
(71) Applicant: YAMAHA HATSUDOKI KABUSHIKI KAISHA, Iwata-shi Shizuoka-ken (JP)
(72) Inventor: Sawai, Seiji, Iwata-shi, Shizuoka-ken (JP)
(74) Representative: Grünecker, Kinkeldey, Stockmair & Schwanhäusser Anwaltssozietät

(57) **Abstract**

A hydraulic damper for a vehicle with a cylinder (5) having a cylinder body (8) and a piston (6) received in said cylinder body, said piston is moveable along a cylinder axis of said cylinder body and divides said cylinder body in an upper and lower oil chamber (15,16), wherein at least one cylinder cover (9) is provided on the cylinder body defining one of said oil chambers, and said cylinder cover is moveable in an axial direction of said cylinder body.

## Description

This invention relates to a hydraulic damper for a vehicle with a cylinder having a cylinder body and a piston received in said cylinder body; in particular to a hydraulic damper for a vehicle in which an oil chamber in a cylinder is divided into two rooms by a piston with a choke provided on a piston rod. Furthermore, this invention also relates to a vehicle suspending device with at least two hydraulic dampers.

A conventional hydraulic damper for a vehicle is configured such that a piston is fitted in a cylinder, and a piston rod connected to the piston is protruded from one end of the cylinder. The cylinder is connected to one of a wheel-side member and a vehicle body-side member, and the piston rod to the other.

The cylinder is comprised of a cylinder body of a cylindrical shape and cylinder covers fixed to the cylinder body at both ends, and a piston is fitted in the cylinder body such that the oil chamber is divided into two rooms. One of the two cylinder covers is penetrated by the piston rod. The piston is formed with a communication passage through which two oil rooms in the cylinder defined by the piston, are brought into communication with each other. A choke is disposed in the communication passage, which choke is adapted to generate damping force during piston movement. That is, when the hydraulic damper extends and contracts and working oil flows from one oil room to the other through the communication passage, the choke acts as a resistance, generating damping force.

However, in the conventional hydraulic damper for a vehicle described above, a problem is raised that it is difficult to form the damper which is able to generates a large damping force while providing an improved riding feeling. This is because if the choke is set to generate a large damping force, the impact produced by wheels running over minute irregularities such as white lines on the road surface, is likely to be transmitted to the vehicle body through the cylinder, and by contrast if the choke is set to mitigate the impact, the damping force generated is decreased.

It is an objective of the present invention to provide a hydraulic damper for a vehicle with a cylinder having a cylinder body and a piston received in said cylinder body and/or a vehicle suspending device with at least two hydraulic dampers, wherein said hydraulic damper provides an improved operation performance.

According to the present invention this objective is solved by a hydraulic damper for a vehicle with a cylinder having a cylinder body and a piston received in said cylinder body, said piston is moveable along a cylinder axis of said cylinder body and divides said cylinder body in an upper and lower oil chamber, wherein at least one cylinder cover is provided on the cylinder body defining one of said oil chambers, and said cylinder cover is moveable in an axial direction of said cylinder body.

Furthermore, according to the present invention this objective is solved by a vehicle suspending device with at least two hydraulic dampers according to at least one of the claims 1 to 11, wherein each hydraulic damper is associated to a wheel of said vehicle, and oil chambers of said hydraulic dampers are connected to a pressure regulating device, said pressure regulating device comprises a first pressure regulating cylinder having a first oil chamber in communication with the oil chamber of one hydraulic damper and a first movable partition for changing a volume of said first oil chamber; a second pressure regulating cylinder having a second oil chamber in communication with the oil chamber of the other hydraulic damper and a second movable partition for changing a volume of said second oil chamber in association with said first movable partition such that volume changes in said first and second oil chambers coincide with each other, wherein a communicating passage means having a choke is provided between the first oil chamber and the second oil chamber.

It is an advantage of the present invention to provide a hydraulic damper for a vehicle as well as a vehicle suspending device with at least two of such hydraulic dampers capable of generating a large damping force, while controlling the transmission of impact, caused by wheels running over minute irregularities, from the wheels to the vehicle body, to a smallest possible degree.

Preferred embodiments of the present invention are laid down in further dependent claims.

In the following, the present invention is explained in greater detail with respect to several embodiments thereof in conjunction with the accompanying drawings, wherein:
- Fig. 1: is a structural view of a suspension system or device incorporating the hydraulic damper for a vehicle according to an embodiment;
- Fig. 2: is a sectional view of a portion of the hydraulic damper for a vehicle according to the embodiment;
- Fig. 3: is a sectional view of a pressure regulating device;
- Fig. 4: is a sectional view of a coupler;
- Fig. 5: is a sectional view of a coupler;
- Fig. 6: is a sectional view showing one embodiment of a cylinder cover;
- Fig. 7: is a sectional view showing another embodiment of the cylinder cover;
- Fig. 8: shows a sectional view of other embodiments of the cylinder cover; and
- Fig. 9: is a sectional view showing another embodiment of the cylinder cover.

### First Embodiment

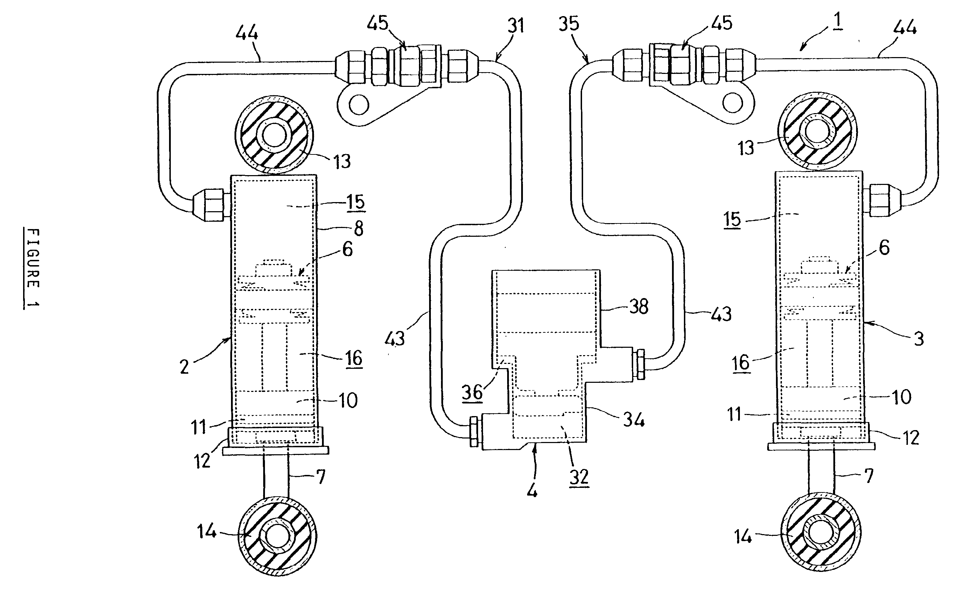

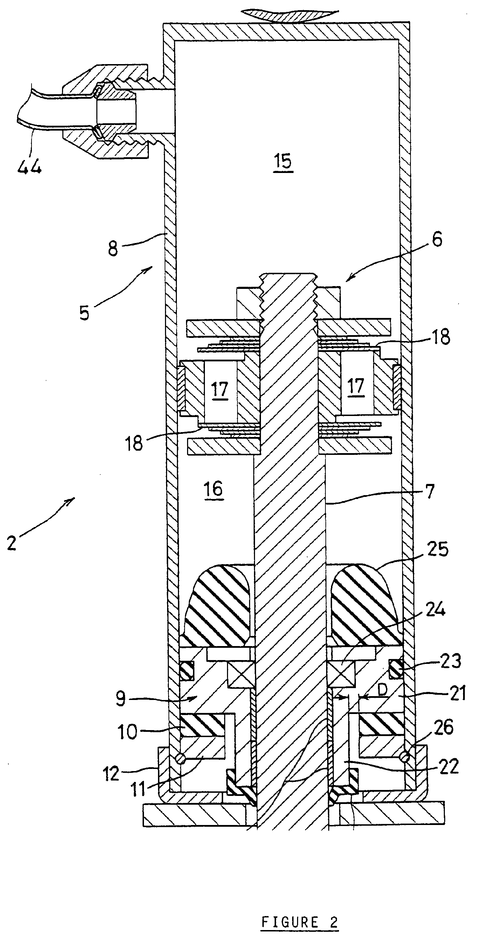

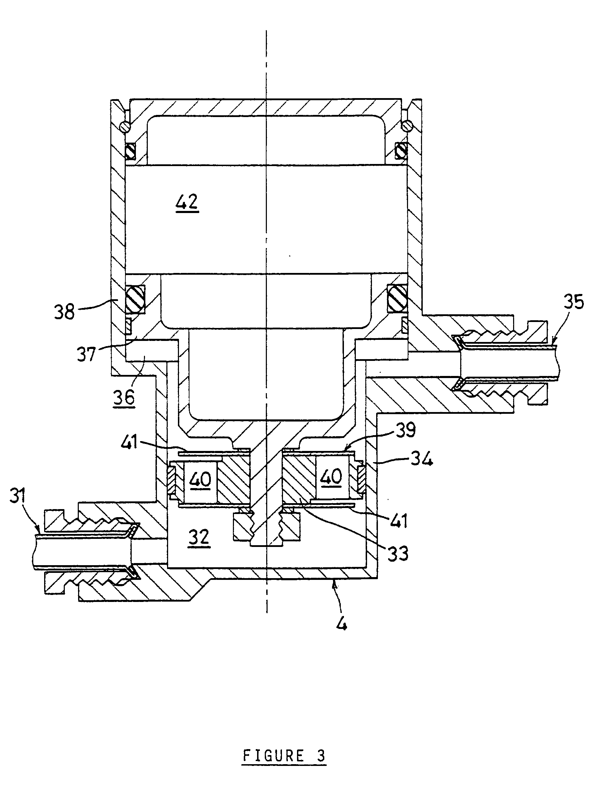

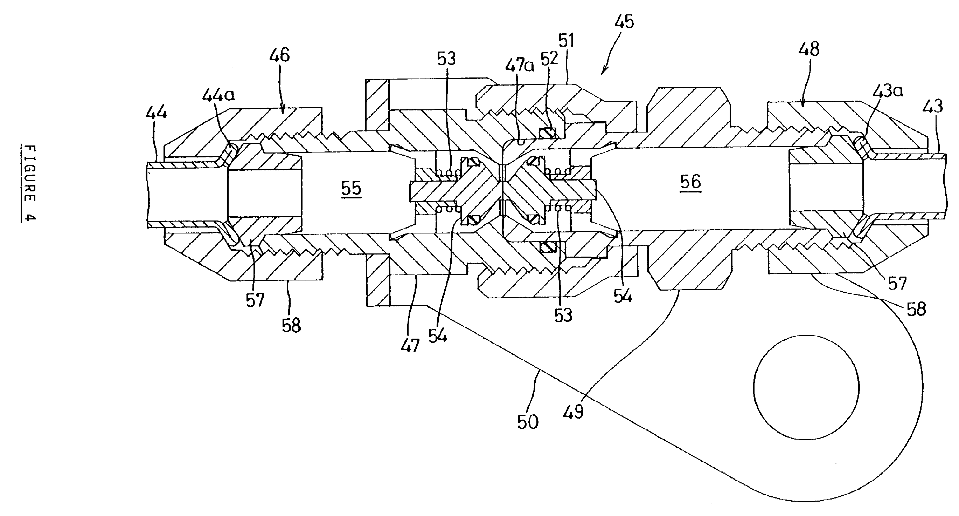

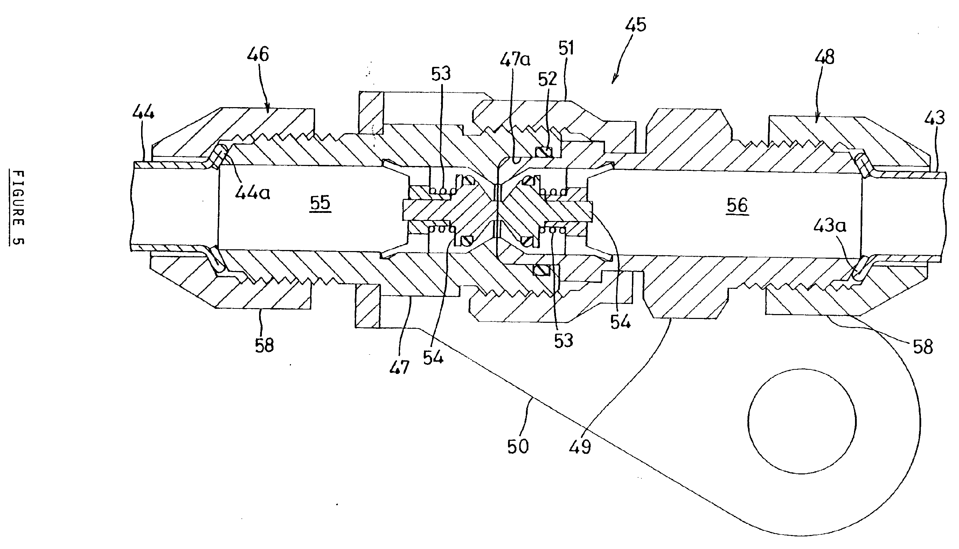

An embodiment of a hydraulic damper for a vehicle will be described below in detail with reference to Figs. 1-5. Fig. 1 is a structural view of a suspension system incorporating the hydraulic damper for a vehicle according to the embodiment; Fig. 2 a sectional view of a portion of the hydraulic damper for a vehicle according to the embodiment; Fig. 3 a sectional view of a pressure regulating device; and Fig. 4 and Fig. 5 sectional views of a coupler.

In these figures, numeral 1 designates a vehicle suspension system incorporating the hydraulic damper for a vehicle according to this embodiment. The suspension system 1 is a device for suspending right and left front wheels and comprised of a hydraulic damper 2 placed between the left front wheel and the vehicle body, a hydraulic damper 3 placed between the right front wheel and the vehicle body, a pressure regulating device 4 connected to these hydraulic dampers 2, 3, etc. The two hydraulic dampers 2, 3 are of the same structure. In the following description, reference is made to the structure of the left side hydraulic damper 2 of these hydraulic dampers 2, 3, and description of the structure of the right side hydraulic damper 3 is omitted.

The hydraulic damper 2 is configured, as shown in Fig. 2, such that a piston 6 is fitted in a cylinder 5, and a piston rod 7 connected to the piston 6 is protruded from one end (lower end in Fig. 2) of the cylinder 5.

The cylinder 5 is comprised of a cylinder body 8 in the shape of a cylinder with a bottom; a cylinder cover 9 for closing the opening of the cylinder body 8 with the piston rod 7 protruded therefrom and supporting the piston rod 7 for movement; a damper rubber (elastic means) 10 provided axially outwardly (on the lower side in Fig. 2) of the cylinder cover 9; a stopper 11; a cover plate 12; etc, and working oil is filled therein.

In this embodiment, the upper end of the cylinder 5 in Fig. 1 and Fig. 2 is connected to a frame member (not shown) of the vehicle body through a cushion rubber 13 (see Fig. 1), and the lower end of the piston rod 7, to a member which displaces in association with a wheel (not shown), through a cushion rubber 14.

The piston 6 is a piston with a choke, conventionally well known, and as shown in Fig. 2, it is adapted to partition the cylinder body 8 into two rooms, an upper oil chamber 15 and a lower oil chamber 16. The piston 6 is formed with a plurality of communication passages 17 for connecting the oil chambers 15, 16 to each other, and fitted with leaf springs 18 for opening/closing the openings of the communication passages 17. This leaf springs 18 constitute a choke of the piston 6.

The cylinder cover 9 is comprised of a pressure receiving plate 21 fitted in the cylinder body 8 and formed in the shape of an annular plate, and a cylinder 22 formed protruding axially (coaxially) outwardly from and integral with the pressure receiving plate 21 at the axial center portion thereof, and fitted in the cylinder body 8 for movement in the axial direction with the piston rod 7 inserted in the hollow portion of the axial center portion.

On the pressure receiving plate 21 are mounted, at the outside circumference, an O-ring 23 for preventing leakage of working oil from the clearance between the cylinder body 8 and the plate 21, and at the inside circumference, a seal member 24 for preventing leakage of working oil from the clearance between the piston rod 7 and the plate 21. On the inner end face (end face opposite to the piston 6) of the pressure receiving plate 21 is affixed a cushion rubber 25 for preventing direct contact of the piston 6 with the cylinder cover 9. The outer end face of the pressure receiving plate 21 faces the damper rubber 10.

The damper rubber 10, which constitutes a damping material according to this embodiment, is formed in the shape of an annular plate, and placed between the stopper 11 fixed at the end of the cylinder body 8 and the pressure receiving plate 21. The stopper 11 also has an annular shape, and is fitted in the cylinder body 8, with a circlip 26 preventing the outward movement thereof.

To the cylinder 22 of the cylinder cover 9 are bonded fixedly, at the inside circumference, a cylindrical slide bearing 27 for supporting the piston rod 7 for sliding movement, and at the protruded end, a dust seal 28 for preventing ingress of foreign substances sticking to the piston rod 7 to the sliding section. Between the cylinder 22 and the cylinder body 8 are disposed the damper rubber 10 and the stopper 11 to make effective use of the dead space formed axially outwardly of the cylinder cover 9. The size of the clearance D between the cylinder 22 and the damper rubber 10 is set such that when the damper rubber 10 is pressed by the pressure receiving plate 21 and the stopper 11 and expanded radially inwardly, the expanded portion doesn't come in contact with the piston rod 7.

In this embodiment, since the cylinder 22 is formed such that its outer end is positioned axially outwardly of the stopper 11 and the dust seal 28 is attached to the outer end, even if the damper rubber 10 is compressed to be expanded radially inwardly, interference of the expanded portion with the dust seal 28 can be avoided. As a result, a large space can be formed radially inwardly of the damper rubber 10, so that a material with a relatively low spring constant (soft material) can be used for the damper rubber 10. For example, the damper rubber 10 can be configured such that when compressed, its inside circumferential portion expands radially inwardly to be brought into contact with the outside circumferential surface of the cylinder 22.

The pressure regulating device 4, as shown in Fig. 1 and Fig. 3, comprises a first pressure regulating cylinder 34 having a first oil chamber 32 in communication with the upper oil chamber 15 of the left hydraulic damper 2 through a left pipe line 31 (described later), and a first movable partition 33 for changing the volume of the first oil chamber 32; and a second pressure regulating cylinder 38 having a second oil chamber 36 in communication with the upper oil chamber 15 of the right hydraulic damper 3 through a right pipe line 35 (described later), and a second movable partition 37 for changing the volume of the second oil chamber 36 in association with the first movable partition 33 such that volume changes of the oil chambers 33, 36 coincide with each other, and it is fixed to an unillustrated support bracket on the vehicle body side.

The first and second pressure regulating cylinders 34, 38 are formed integrally in this embodiment such that the first and the second movable partitions 33, 37 are located on the same axis.

The movable partitions 33, 37 of the pressure regulating cylinders 34, 38 are formed such that the effective cross-sectional area of the first oil chamber 32 coincides with that of the second oil chamber 36, and they are connected to each other such that the volume of the first oil chamber 32 and that of the second oil chamber 36 are equivalent at all times. The hydraulic system of the first oil chamber 32 and that of the second oil chamber 36 are brought into communication with each other through a choke 39 provided in the movable partition 33. The choke 39 is constituted by leaf springs 41 for opening/closing communication passages 40 formed in the second movable partition 33 to connect the first oil chamber 32 to the second oil chamber 36.

In this embodiment, the second pressure regulating cylinder 38 is formed with a high pressure gas chamber 42 such that the second movable partition 39 constitutes part of the wall of the gas chamber 42. The high pressure gas chamber 42 is filled with a gas at high pressure so that working oil may be pressurized by the high pressure gas.

The left pipe line 31 and the right pipe line 35 for connecting the pressure regulating device 4 to the right and left hydraulic dampers 3, 4 are comprised, as shown in Fig. 1, of pressure regulating device-side pipes 43 having one ends connected to the pressure regulating device 4, damper-side pipes 44 having one ends connected to the hydraulic dampers 2, 3, and couplers 45 for connecting these two pipes 43, 44 to each other, respectively. The two pipes 43, 44 are formed of metal pipes bent to a shape to suit a given piping route.

The coupler 45 is comprised, as shown in Fig. 4, of a socket 47 connected to the end of the damper-side pipe 44 by a flare joint 46, and a plug 49 connected to the end of the pressure regulating device-side pipe 43 by a flare joint 48, and it is attached to a support member (not shown) of the vehicle body through a support bracket 50 fixed to the socket 47.

The socket 47 and the plug 49 are adapted to be connected by a nut 51, on the plug 49, screwed on the socket 47, and to be disconnected by the nut 51 loosened to be removed from the socket 47. The connection is arranged such that the forward end of the plug 49 is fitted in a recess 47a of the socket 47. An O-ring 52 is provided in the recess. The socket 47 and the plug 49 are arranged such that they act as valves themselves, and contain valve cores 54 biased toward valve closing by compression coil springs 53, respectively. The valve core 54 is adapted to be opened when the plug 49 is connected to the socket 47 as described above and the forward end of the valve core 54 is pressed by the other valve core 54. As a result of the valve core 54 being opened in this way, a working oil passage 55 in the socket 47 and a working oil passage 56 in the plug 49 are brought into communication with each other. When the plug 49 is disconnected from the socket 47, the valve core 54 is closed and thus the working oil passages 55, 56 are closed.

The flare joints 46, 48 in the socket 47 and the plug 49, for connecting the damper-side pipe 44 and the pressure regulating device-side pipe 43, are arranged such that the flared portions 43a, 44a at the pipe ends are held tightly between sleeves 57 and nuts 58. These flare joints 46, 48 can be arranged without using sleeves, as shown in Fig. 5.

Fig. 5 is a sectional view showing another example of the coupler 45. In the figure, like or equivalent parts as illustrated in Fig. 4 are designated by like reference numerals and detailed description is omitted. The flare joints 46, 48 shown in Fig. 5 are arranged such that flared portions 43a, 44a at the pipe ends are held tightly between conical surfaces 47a, 49a formed at the rear ends of the socket 47 and the plug 49, and nuts 58. No sleeves are needed in this construction, so that size reduction can be effected as well as a reduction in the number of parts, providing cost reduction.

In the suspension system 1 incorporating the hydraulic dampers 2, 3 as described above, if the left hydraulic damper 2 contracts and the right hydraulic damper 3 extends as a result of, for example, the right turn of the vehicle, working oil flows out from the left hydraulic damper 2 and also flows into the right hydraulic damper 3. The amount of the working oil flowing in and out with respect to the right and left hydraulic dampers 2, 3 during turning of the vehicle, are equivalent to the volume of displacement of the piston rod 7 in the cylinder 5.

At this time, the oil pressure of the first oil chamber 32 in the pressure regulating device 4 rises while that of the second oil chamber 36 falls, and this pressure difference causes working oil to pass through the choke 39 of the pressure regulating device 4. Therefore, in this condition, damping force caused by the working oil passing through the choke of the hydraulic damper 2 works, as well as damping force caused by the working oil passing through the choke 39 of the pressure regulating device 4.

If the right and left hydraulic dampers 2, 3 moves in the same direction, the pressure difference between the first oil chamber 32 and the second oil chamber 36 is reduced, decreasing the amount of working oil passing through the choke 39. Thus, the damping force decreases compared with that generated during turning. That is, the suspension system 1 increases its damping force relatively when the vehicle body banks.

When wheels run over minutes irregularities such as white lines on the road surface during running, the impact load is transmitted from the wheels to the piston rods 7 of the hydraulic dampers 2, 3. Such impact load causes the pressure of the upper oil chamber 15 in the cylinder 5 to increase instantaneously and the pressure of the lower oil chamber 16 to decrease instantaneously. Since the cylinder 5 is arranged such that the cylinder cover 9 is mounted to the cylinder body 8 for axial movement, and outward movement of the cylinder cover 9 is prevented by the damper rubber 10, the foregoing instantaneous decrease of the oil pressure in the lower oil chamber 16 causes the cylinder cover 9 to move upwardly slightly.

That is, oil pressure change in the lower oil chamber 16 is mitigated, so that the impact load transmitted from the piston 6 to the cylinder body 8 through working oil is decreased. In other words, the impact load transmitted from the wheels to the vehicle body through the hydraulic dampers 2, 3 is decreased.

As a result of the transmission of the impact load being prevented as described above, the cushion rubbers 13, 14 placed between the opposite ends of the hydraulic dampers 2, 3 and members on the wheel side or the vehicle body side, can be formed of material with a large spring constant (hard material), providing improved response of the hydraulic dampers 2, 3.

In the case where the pressure regulating device 4 is connected to the hydraulic dampers 2, 3 as shown in this embodiment, if the cylinder cover 9 displaces, the amount of working oil equivalent to the displacement of the cylinder cover 9 flows into and out from the pressure regulating device 4, as described above. The amount of working oil flowing in and out in this time is larger than that during turning of the vehicle. Therefore, if the impact load is transmitted from wheels, with both hydraulic dampers 2, 3 moving in the opposite directions, a responsive damping force can be generated by the pressure regulating device 4 at the early stage of the beginning of the operation.

Although the damping material is exemplified by a component made of rubber in this embodiment, a belleville spring may be used instead of the damper rubber 10.

### Second Embodiment

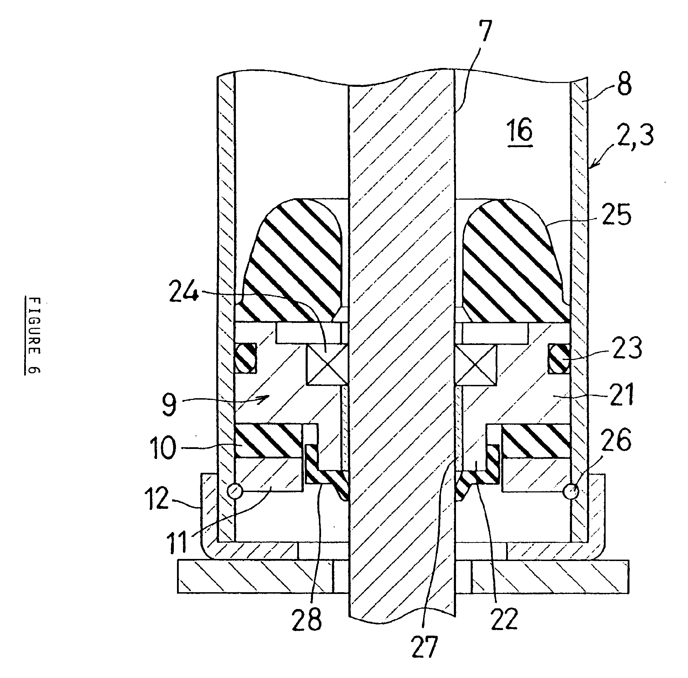

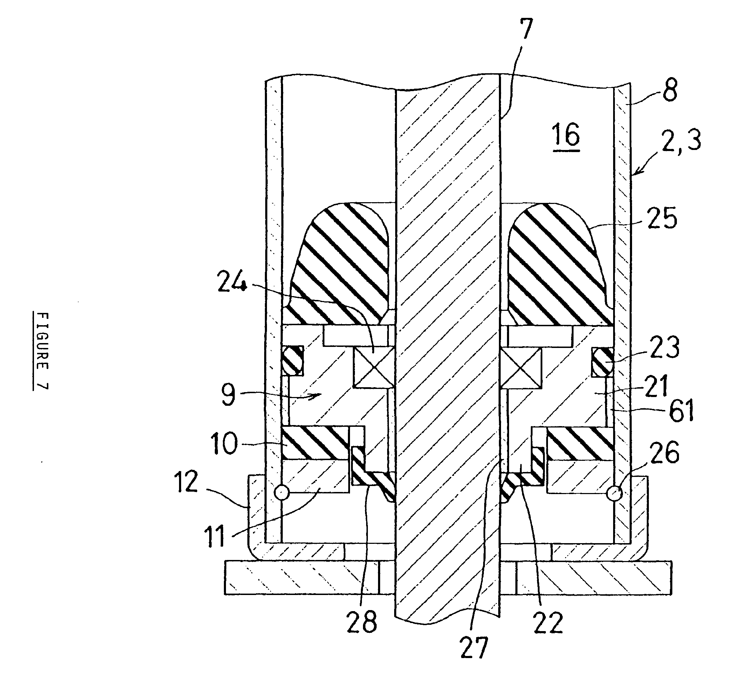

The cylinder cover 9 of the hydraulic dampers 2, 3 can be formed as shown in Fig. 6 and Fig. 7.

Fig. 6 and Fig. 7 are sectional views showing other embodiments of the cylinder cover. In these figures, like or equivalent parts as illustrated in Figs. 1-5 are designated by like reference numerals and detailed description is omitted.

The cylinder cover 9 shown in Fig. 6 is formed such that the cylinder 22 is shorter than that in the first embodiment. If such a type of cylinder cover 9 is formed, a damper rubber 10 with a relatively large spring constant is used so that when compressed, its inside circumferential portion may not come in contact with the dust seal 28.

The cylinder cover 9 shown in Fig. 7 is fitted with a ring 61 made of material with a relatively small frictional resistance, at the outside circumference of the pressure receiving plate 21, and is in sliding contact with the cylinder body 8 through the ring 61. The material for the ring 61 is one that the frictional resistance to the ring 61 in sliding contact with the cylinder body 8 is smaller than that to the cylinder cover 9 in sliding contact with the cylinder body 8. The material for the ring 61 includes, for example, a fluororesin, a metallic material for slide bearing, etc. The ring 61 constitutes a friction layer. As a result of the ring 61 being placed between the cylinder 9 and the cylinder body 8, the frictional resistance to the cylinder cover 9 in sliding contact with the cylinder body 8 is decreased, lowering the load (oil pressure) necessary to move the cylinder cover 9. As a result, even a small impact load can cause movement of the cylinder cover 9, effecting further improvement in a riding feeling of the vehicle. In addition to the ring 61 fitted on the cylinder cover 9, the same effect can be achieved also by a coating layer made of, for example, a fluororesin provided on at least one of the outside circumferential surface of the pressure receiving plate 21 and the inside circumferential surface of the cylinder body 8.

Although the damping material is exemplified by a component made of rubber also in this embodiment, a belliville spring may be used instead of the damper rubber 10.

### Third Embodiment

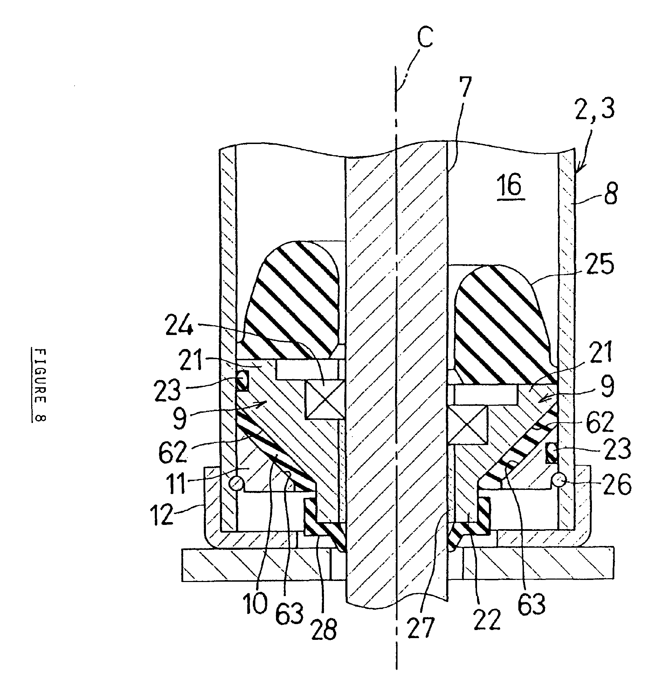

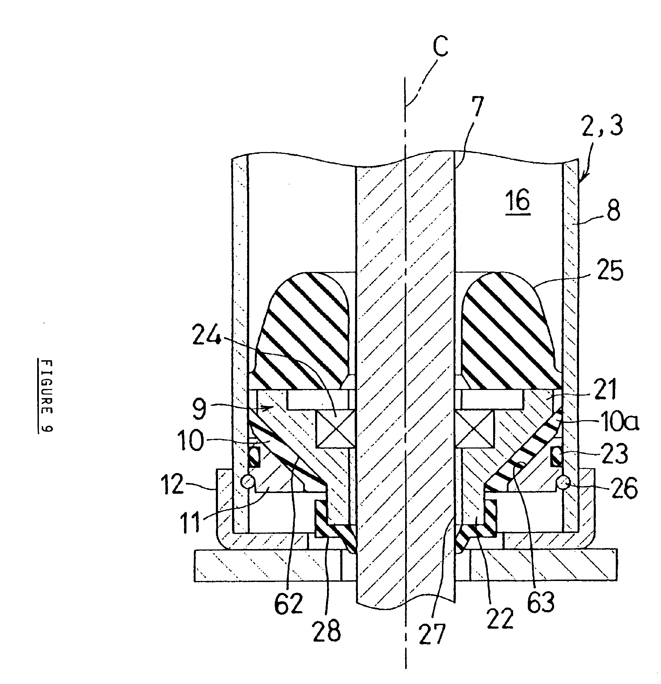

The cylinder cover and the stopper can be formed as shown in Fig. 8 and Fig. 9.

Fig. 8 and Fig. 9 are sectional views showing other embodiments of the cylinder cover. In these figures, like or equivalent parts as illustrated in Figs. 1-5 are designated by like reference numerals and detailed description is omitted.

Fig. 8 is depicted such that different constructions are represented on the right and left sides of the cylinder 5 with respect to the axis C. On the left side is shown an example of an O-ring 23 mounted on the cylinder cover 9, and on the right side, the O-ring 23 mounted on the stopper 11.

The cylinder cover 9 shown in Fig. 8 is formed with a conical surface at the axially outward end of the pressure receiving plate 21 (lower side in the figure). This conical surface is designated by numeral 62. Specifically, the conical surface 62 extends outwardly along the cylinder axis C of the cinder 5, with the axis C as a center line, and formed such that the outside diameter of the pressure receiving plate 21 is decreased gradually in the axially outward direction of the cylinder.

On the end face of the stopper 11 opposite to the cylinder cover 9 is also formed an conical surface 63 having the same taper angle as the conical surface 62 but constituting the inside circumference. A damper rubber 10 is affixed to these two conical surfaces 62, 63 such that it extends over the entire areas of the conical surfaces.

As a result of the damper rubber 10 being placed between the conical surfaces 62, 63, the conical surfaces 62, 63 act as guides, so that the cylinder cover 9 moves along the axis C of the cylinder 5. Therefore, the cylinder cover 9 moves smoothly, ensuring prevention of the transmission of the impact.

The cylinder cover 9 shown in Fig. 9 is formed such that the outside diameter of the pressure receiving plate 21 is smaller than the inside diameter of the cylinder body 8 with a clearance between these two components. The pressure receiving plate 21 and the stopper 11 are formed with conical surfaces 62, 63 similar to those shown in Fig. 8, and coupled together through a damper rubber 10 affixed to these two conical surfaces 62, 63. The damper rubber 10 is formed such that it is protruded radially outwardly from the outside circumferential surface of the pressure receiving plate 21 and the protruded portion 10a is adapted to seal the clearance between the cylinder cover 9 and the cylinder body 8. Also, an O-ring 23 is mounted on the stopper 11 so as to prevent leakage of working oil from the clearance between the stopper 11 and the cylinder body 8.

As a result of the damper rubber 10 having the function of a seal member, a special seal member for sealing the clearance between the cylinder cover 9 and the cylinder body 8 is not necessary, thereby reducing the number of parts and effecting cost reduction. In addition, the damper rubber 10 is placed between the conical surfaces 62, 63, which act as guides, allowing the cylinder cover 9 to move along the axis C of the cylinder 5. Therefore, in spite of adopting the structure in which the outside circumferential surface of the cylinder cover 9 is not in sliding contact with the cylinder body 8, that is, the cylinder cover 9 is provided in the cylinder body in clearance-fitting relation, the cylinder cover 9 can be moved axially along the axis C smoothly, ensuring prevention of the transmission of the impact.

Although in the foregoing embodiments is shown an example of a front wheel suspension system 1 incorporating hydraulic dampers 2, 3, the hydraulic dampers 2, 3 of this embodiments can be applied to a rear wheel suspension system for suspending right and left rear wheels. If a structure is adopted in which a pressure regulating device 4 is connected to two hydraulic dampers 2, 3, the hydraulic damper for the left front wheel may be connected to the hydraulic damper for the right rear wheel through the pressure regulating device 4, or the hydraulic damper for the right front wheel may be connected to the hydraulic damper for the left rear wheel through the pressure regulating device 4. Further, the hydraulic damper 2 or 3 according to this embodiments can be used independently for an autobicycle or a three-wheeler.

While in the foregoing embodiments, a system is shown, as an example, in which the piston rod 7 is connected to the wheel-side member and the cylinder 5 to the vehicle body-side member, the piston rod 7 may be connected to the vehicle body-side member and the cylinder 5 to the wheel-side member. In this case, the damper-side pipe 44 for connecting the cylinder 5 and the coupler 45 is formed of a flexible hose, for vertical movement with the cylinder 5 relative to the vehicle body.

A hydraulic damper for a vehicle according to the embodiments comprises a cylinder cover penetrated by a piston rod is supported in a cylinder body for movement in the axial direction of the cylinder, and a stopper is provided, facing said cylinder cover, in the cylinder body axially outwardly of said cylinder cover, a damping material being placed between said stopper and said cylinder cover.

Thus, when wheels run over minute irregularities such as white lines on the road surface and the impact load is transmitted to the oil chamber between the cylinder cover and the piston on the damping material side, deformation of the cylinder cover allows change in the oil pressure in the oil chamber to be mitigated.

Therefore, the hydraulic damper for a vehicle according to this embodiments is capable of generating a large damping force, while controlling the transmission of impact, caused by wheels running over minute irregularities, from the wheels to the vehicle body, to a smallest possible degree.

The damping material is elastically deformed with the rise and fall of the oil pressure in the oil chamber formed between the cylinder cover penetrated by the piston rod and the piston, and the cylinder cover moves relative to the cylinder body. Therefore, when wheels run over minute irregularities such as white lines on the road surface and the impact load is transmitted to the oil chamber, deformation of the cylinder cover allows change in the oil pressure in the oil chamber to be mitigated.

According to an embodiment, the hydraulic damper for a vehicle comprises a friction layer made of material with a relatively small frictional resistance provided on at least one of the cylinder cover penetrated by the piston rod and the cylinder body at the contact portion thereof.

Since frictional resistance is reduced when the cylinder cover moves relative to the cylinder body, the load (oil pressure) necessary to move the cylinder cover is reduced. Therefore, even a small impact load can be mitigated, so that a riding feeling of the vehicle incorporating this hydraulic damper for a vehicle can be improved further. The friction layer includes a coating material covering the outside surface of the cylinder cover or the cylinder body, a sliding member attached to one of these two components, etc.

According to an embodiment, the hydraulic damper for a vehicle comprises conical surfaces extending along the cylinder axis with said axis as a center line. Said conical surfaces are formed on the opposing end faces of the stopper and the cylinder cover, respectively, and a damping material made of rubber is placed between these conical surfaces. The cylinder cover moves along the cylinder axis with the conical surfaces acting as guides, so that the cylinder cover moves smoothly, ensuring prevention of the transmission of the impact.

Within a hydraulic damper for a vehicle according to an embodiment the damping material is protruded radially outwardly from the cylinder cover to seal the clearance between the cylinder cover and the cylinder body. Thus, a special seal member is not necessary for sealing the clearance between the cylinder cover and the cylinder body, thereby reducing the number of parts and effecting cost reduction.

A vehicle suspending device comprises hydraulic damper with cylinders as described above. Said cylinders are provided one for each of a pair of wheels in the vehicle body, and to the oil chambers in these cylinders are connected a pressure regulating device comprising a first pressure regulating cylinder having a first oil chamber in communication with the oil chamber of one cylinder and a first movable partition for changing the volume of said first oil chamber; a second pressure regulating cylinder having a second oil chamber in communication with the oil chamber of the other cylinder and a second movable partition for changing the volume of said second oil chamber in association with said first movable partition such that volume changes in said first and second oil chambers coincide with each other; and a choke placed between the hydraulic system of the first oil chamber and that of the second oil chamber.

Accordingly, if the impact load is transmitted from wheels with the pair of cylinders moving in the different directions, a relatively large damping force can be generated in the pressure regulating device, so that a responsive control of damping force can be performed at the early stage of the beginning of the operation, using the pressure regulating device.

Movements of a pair of cylinders in the different directions cause working oil to pass through the choke of the pressure regulating device, generating damping force also in the pressure regulating device. If both cylinders move in the same direction, the amount of working oil passing through the choke of the pressure regulating device is decreased, reducing the damping force relatively.

When wheels run over minute irregularities on the road surface and the impact load is transmitted to the cylinder, causing displacement of the cylinder cover, working oil corresponding to the amount of displacement of the cylinder cover flows into and out from the pressure regulating device. Therefore, if the impact load is transmitted from wheels with the pair of cylinders moving in the different directions, a relatively large damping force can be generated.

Within the embodiments mentioned above the damping rubber is (preferably) fixed or bonded to the stopper and/or the cylinder cover.

The embodiments described above are showing a hydraulic damper for a vehicle with a cylinder 5 having a cylinder body 8 and a piston 6 received in said cylinder body 8, said piston 6 is moveable along a cylinder axis of said cylinder body 8 and divides said cylinder body 8 in an upper and lower oil chamber 15, 16, wherein at least one cylinder cover 9 is provided on the cylinder body 8 defining one of said oil chambers, and said cylinder cover 9 is moveable in an axial direction of said cylinder body 8.

Said cylinder cover 9 is supported at said cylinder body 8 in axial direction by an elastic means 10. Said cylinder body 8 is provided with a stopper means 11 facing said cylinder cover 9 and said elastic means 10 is placed between said stopper 11 and said cylinder cover 9. Said cylinder cover 9 is provided between the oil chamber and said stopper means 11.

A hydraulic damper according to an embodiment comprises conical surfaces 62, 63 facing each other and are provided on the cylinder cover 9 and the stopper 11, respectively. A center line of said conical surfaces 62, 63 extends along the cylinder axis of the cylinder body 8, wherein said elastic means 10 is provided between these conical surfaces 62, 63.

According to an embodiment an annular clearance is provided between said cylinder cover 9 and said cylinder body 8, wherein said elastic means 10 has sealing property and is protruded radially outwardly from said cylinder cover 9 to the cylinder body 8 to seal the clearance between the cylinder cover 9 and the cylinder body 8.

Said elastic means 10 is made of a damping material, especially made of rubber. Alternatively, said elastic means is a spring means, especially a belleville spring.

According to the embodiments, said piston 6 is provided with a piston rod 7, said piston rod extends in the axial direction of the cylinder body 8 and penetrates the cylinder cover 9, wherein a sealing means 24 is provided between said piston rod 7 and said cylinder cover 9, and said piston rod 7 is relatively moveable with regard to said cylinder cover 9.

Said cylinder cover 9 is in sliding contact with said cylinder body 8. A sliding layer made of material with a relatively small frictional resistance is provided on said cylinder cover 9 and/or said cylinder body 8 at a contact portion thereof.

The vehicle suspending device as described above comprises at least two hydraulic dampers 2, 3 according to at least one of the embodiments, wherein each hydraulic damper 2, 3 is associated to a wheel of said vehicle, and oil chambers of said hydraulic dampers 2, 3 are connected to a pressure regulating device 4, said pressure regulating device 4 comprises a first pressure regulating cylinder 34 having a first oil chamber 32 in communication with the oil chamber 15 of one hydraulic damper 2 and a first movable partition 33 for changing a volume of said first oil chamber 32; a second pressure regulating cylinder 38 having a second oil chamber 36 in communication with the oil chamber 15 of the other hydraulic damper 3 and a second movable partition 37 for changing a volume of said second oil chamber 36 in association with said first movable partition 33 such that volume changes in said first and second oil chambers 32, 36 coincide with each other, wherein a communicating passage means 40 having a choke 39 is provided between the first oil chamber 32 and the second oil chamber 36.

## Claims

1. A hydraulic damper for a vehicle with a cylinder (5) having a cylinder body (8) and a piston (6) received in said cylinder body (8), said piston (6) is moveable along a cylinder axis of said cylinder body (8) and divides said cylinder body (8) in an upper and lower oil chamber (15, 16), wherein at least one cylinder cover (9) is provided on the cylinder body (8) defining one of said oil chambers, and said cylinder cover (9) is moveable in an axial direction of said cylinder body (8).

2. A hydraulic damper according to claim 1, **characterized in that** said cylinder cover (9) is supported at said cylinder body (8) in axial direction by an elastic means (10).

3. A hydraulic damper according to claim 2, **characterized in that** said cylinder body (8) is provided with a stopper means (11) facing said cylinder cover (9) and said elastic means (10) is placed between said stopper (11) and said cylinder cover (9).

4. A hydraulic damper according to claim 3, **characterized in that** said cylinder cover (9) is provided between the oil chamber and said stopper means (11).

5. A hydraulic damper according to at least one of the claims 2 to 4, **characterized in that** conical surfaces (62, 63) facing each other are provided on the cylinder cover (9) and the stopper (11), respectively, a center line of said conical surfaces (62, 63) extends along the cylinder axis of the cylinder body (8), wherein said elastic means (10) is provided between these conical surfaces (62, 63).

6. A hydraulic damper according to at least one of the claims 2 to 5, **characterized in that** an annular clearance is provided between said cylinder cover (9) and said cylinder body (8), wherein said elastic means (10) has sealing property and is protruded radially outwardly from said cylinder cover (9) to the cylinder body (8) to seal the clearance between the cylinder cover (9) and the cylinder body (8).

7. A hydraulic damper according to at least one of the claims 2 to 6, **characterized in that** said elastic means (10) is made of a damping material, especially made of rubber.

8. A hydraulic damper according to at least one of the claims 2 to 6, **characterized in that** said elastic means is a spring means, especially a belleville spring.

9. A hydraulic damper according to at least one of the claims 1 to 8, **characterized in that** said piston (6) is provided with a piston rod (7), said piston rod extends in the axial direction of the cylinder body (8) and penetrates the cylinder cover (9), wherein a sealing means (24) is provided between said piston rod (7) and said cylinder cover (9), and said piston rod (7) is relatively moveable with regard to said cylinder cover (9).

10. A hydraulic damper according to at least one of the claims 1 to 9, **characterized in that** said cylinder cover (9) is in sliding contact with said cylinder body (8).

11. A hydraulic damper according to claim 10, **characterized in that** a sliding layer made of material with a relatively small frictional resistance is provided on said cylinder cover (9) and/or said cylinder body (8) at a contact portion thereof.

12. Vehicle suspending device with at least two hydraulic dampers (2, 3) according to at least one of the claims 1 to 11, wherein each hydraulic damper (2, 3) is associated to a wheel of said vehicle, and oil chambers of said hydraulic dampers (2, 3) are connected to a pressure regulating device (4), said pressure regulating device (4) comprises a first pressure regulating cylinder (34) having a first oil chamber (32) in communication with the oil chamber (15) of one hydraulic damper (2) and a first movable partition (33) for changing a volume of said first oil chamber (32); a second pressure regulating cylinder (38) having a second oil chamber (36) in communication with the oil chamber (15) of the other hydraulic damper (3) and a second movable partition (37) for changing a volume of said second oil chamber (36) in association with said first movable partition (33) such that volume changes in said first and second oil chambers (32, 36) coincide with each other, wherein a communicating passage means (40) having a choke (39) is provided between the first oil chamber (32) and the second oil chamber (36).
